# EUROPEAN PATENT SPECIFICATION

(11) **EP 1 632 881 B1**
(45) Date of publication and mention of the grant of the patent: **20.08.2008**
(21) Application number: 05108024.0
(22) Date of filing: 01.09.2005
(51) Int. Cl.: G06K 7/00

(54) **Connection assembly for a chip card, including fraud protection means**
Verbindungsanordnung für Chipkarten mit Sicherungsmitteln vor Betrug
Ensemble de connexion pour carte à puce comportant des moyens de protection contre la fraude

(30) Priority: 07.09.2004 FR 0451975
(43) Date of publication of application: 08.03.2006
(73) Proprietor: CoActive Technologies, Inc., Newton, MA 02458 (US)
(72) Inventor: Valcher, Fabrice, 39100 Dole (FR); Masson, Olivier, 39100 Dole (FR); Daubigney, Patrick, 39100 Authume (FR)
(74) Representative: Kohn, Philippe

(56) References cited:
- EP-A- 0 996 102
- WO-A-98/52139
- US-B1- 6 354 881

## Description

The present invention relates to a connection assembly for connecting an electronic memory card that includes a plurality of electrical contact pads on one of its main faces.

The invention relates to a connection assembly of the type that includes a printed circuit board bearing an electrical connector on its upper face.

The connector is, for example, an electrical connector of the type in which the memory card is inserted from the rear forwards in a longitudinal direction parallel to the general horizontal plane of the card.

According to various known designs, the connector comprises mainly a contact-bearing block made of insulating material having a horizontal upper plane face and a plurality of electrical conductors, each of which is in the form of an elastically deformable blade.

The blades are arranged parallel to a longitudinal horizontal direction that corresponds to the direction of insertion of the card when the latter is inserted horizontally parallel to its plane.

According to a known design, each contact blade comprises:
- a curved first end for contact with a corresponding pad on the card placed in the horizontal lower face of the latter, this first end projecting or being capable of projecting, vertically upwards, from the upper plane face of the insulating block;
- a longitudinal central portion for connecting the blade to the insulating block, it being possible for the connection to be made for example by longitudinal insertion with catching barbs or else by overmoulding; and
- a second end for electrically connecting the blade, constituting a pad for electrically connecting the blade to a conducting track on the upper face of the printed circuit board PCB forming part of a processing circuit of a read/write device having such a connection assembly.

The connector may, for example, be of the "contact landing" type, in which the contact ends of the contact blades therefore come into contact with the pads on the card only at the end of insertion travel of the card into the connector. A connector of this type is described and shown in detail in the documents WO-A-98/52139 and US-B1-6 345 881 in the name of ITT Manufacturing Enterprises, Inc.

Among the various contact blades parallel to one another, in one or more groups of several blades ― for example in two groups of four blades aligned longitudinally in pairs - the connector includes at least one called "signal" contact blade.

It should be noted, for example, that among the signal contact blades is what is called the "input/output" contact blade or I/O blade, which is in contact with a corresponding pad on the card and produces an I/O signal when the card is in position.

Among the various contact blades, the connector also includes at least one second "earth" contact blade intended to be in contact with a corresponding pad on the card and is connected to a conducting earth track on the upper face of the printed circuit board.

Various attempts at fraud on read/write devices fitted with such a connector include, in particular, a step with the purpose of reaching the first I/O contact blade.

Such a manoeuvre is a determining step for perpetrating a fraud on the card.

For this purpose, a fraudster may for example drill a hole in the insulating block and/or in the printed circuit board which is equipped, on its upper face, with the connector.

In the case of a connector of the type described and shown in the documents WO-A-98/52139 and US-B1-6 345 881, the connection pads of the contact blades can be very easily accessed and are therefore particularly vulnerable.

The object of the invention is to improve the general security of read/write devices by providing means for detecting and preventing such an attempt at fraud.

For this purpose, the invention proposes a connection assembly of the abovementioned type, characterized in that the connector includes at least one protective metal plate that extends opposite a facing portion of the signal blade and is electrically connected to an "earth" conducting track on the upper face of the printed circuit board PCB forming part of an earth circuit.

According to other features of the invention:
- the connector includes at least one first protective metal plate that extends vertically opposite a portion of the pad for connecting the first signal blade and is electrically connected to the conducting earth track;
- the first protective metal plate lies in a transverse plane orthogonal to the longitudinal direction of the connection pad that it protects;
- the connection pad of the first signal blade includes at least one vertical branch of transverse orientation parallel to the first protective plate;
- the connection pad of the first signal blade includes at least one lower horizontal branch that extends the vertical branch rearwards and lies substantially in the plane of the lower face of the insulating block;
- the first protective plate includes a lower protective extension that extends opposite the connection pad;
- the said extension constitutes a conducting tongue that extends longitudinally rearwards, the free end of the said tongue being in electrical contact with the conducting earth track;
- the connector includes two second mutually parallel and opposed protective plates, each of which extends vertically opposite a portion of the connection pad of the signal blade, lies in a lateral plane parallel to the longitudinal direction of the connection pad that it protects and is electrically connected to the earth track so as to protect the connection pad on its two longitudinal sides;
- the connector includes at least one protective metal plate that extends horizontally above and opposite a portion of the signal blade;
- the horizontal protective plate extends opposite the lower horizontal branch of the connection pad of the signal blade;
- each protective plate belongs to a protective metal cage;
- the connector includes a support made of insulating material, which carries each protective plate and is attached in a complementary housing of the insulating block;
- the insulating support is mounted so as to move, relative to the insulating block and to the upper face of the printed circuit board, between an initial, temporary and indexed, assembly position in which the signal blade is not protected and a final, mounted position, for protecting the signal blade, in which final position each protective plate is in its protection position and is connected to the earth track;
- the insulating support is mounted so as to pivot about a horizontal transverse axis; and
- the connector includes means for locking the insulating support in its final, mounted protection position.

Other features and advantages of the invention will become apparent on reading the following detailed description, to understand which the reader may refer to the appended drawings in which:
- Figure 1 is a perspective top rear three-quarter view of one embodiment of a connection assembly according to the teachings of the invention, which includes an electrical connector and, in exploded perspective, part of the printed circuit board that bears the connector, the protective cage with its insulating support both being illustrated in their initial, temporary assembly position;
- Figure 2 is a detailed view on a larger scale that illustrates, in exploded perspective, the protective cage and its insulating support in their orientation corresponding to the initial, temporary assembly position illustrated in Figure 1;
- Figure 3 is a perspective bottom view of the connector illustrated in Figure 1, which is shown with neither the protective cage nor its insulating support;
- Figure 4 is a view similar to that of Figure 2, which illustrates the two components in another orientation and in association with a corresponding portion (illustrated in Figure 3) of the connector;
- Figure 5 is a detailed view on a larger scale of the central part of the connector of Figure 1, in which the protective cage and its insulating support are illustrated in their final, mounted protection position;
- Figure 6 is a similar bottom view of the detail of Figure 5;
- Figure 7 is a sectional detailed view in the longitudinal vertical plane 7-7 of Figure 1;
- Figure 8 is a view similar to that of Figure 7 in which the protective cage and its insulating support are illustrated in their final, mounted protection position;
- Figure 9 is a sectional view on the line 9-9 of Figure 8; and
- Figures 10 to 13 are views similar to some of the previous figures, which illustrate an alternative embodiment of the protective cage and the insulating support.

In the description that follows, identical, similar or analogous components will be denoted by the same reference numerals.

Without implying any limitation, to make it easier to understand the description and the drawings the terms "vertical", "horizontal", "lower", "upper", "top", "bottom", "transverse", "longitudinal", etc. will be adopted with reference to the reference frame L, V, T indicated in the figures.

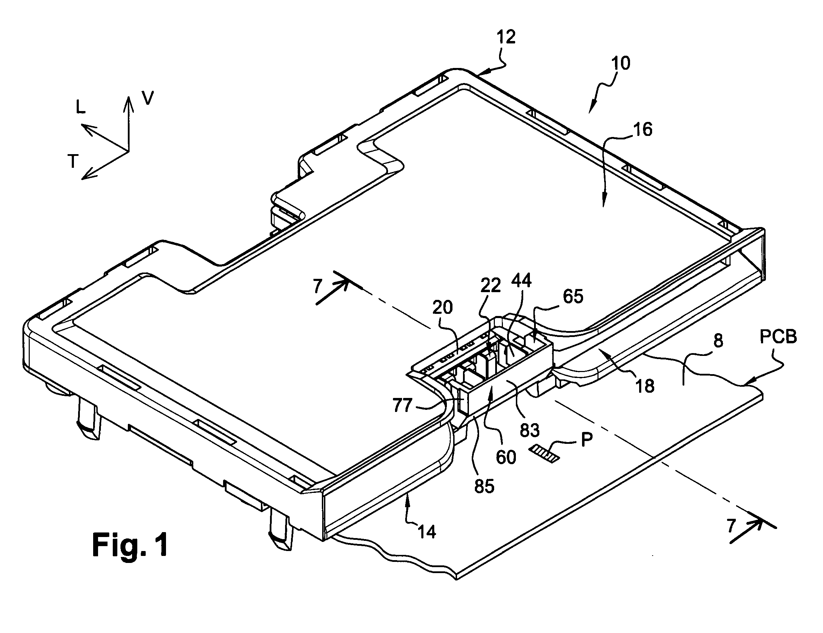

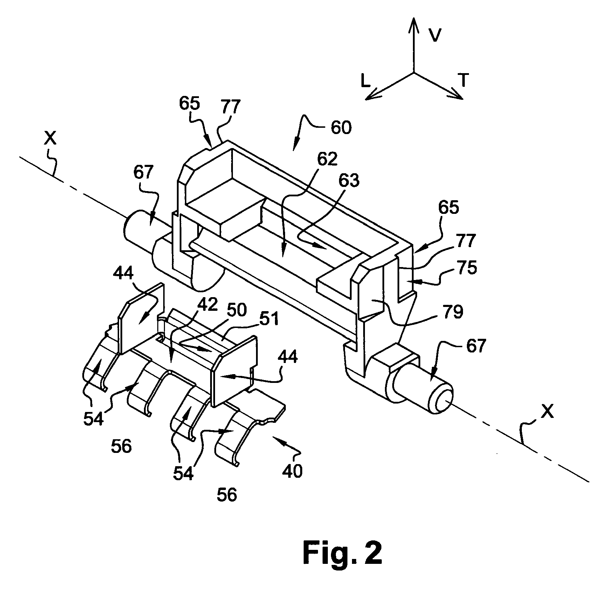

Figures 1 and 2 show a connector 10 consisting essentially of an insulating plastic body or case 12 produced by moulding.

The general design of the connector 10 with its insulating body 12 is here of the type described and shown in the documents WO-A-98/52139 and US-B1-6 345 881.

The connector 10 is shown placed above a printed circuit board PCB that has, on its upper face 8, many conducting contacts, only one P of which is illustrated, this being the "earth" track within the context of the invention, that is to say a track forming part of an earth circuit of the read/write device (not shown) to which the connection assembly 8-10 belongs.

The case 12 essentially consists of a lower horizontal plate 14 and an upper horizontal plate 16 which between them define a longitudinal slot 18 for the forward insertion, from the rear, along the direction indicated by the arrow "L" in Figures 1 and 2, of a memory card (not shown) that includes, on its lower face oriented so as to be opposite the upper facing face 20 of the lower plate 14, conducting pads placed in a standardized fashion.

In its central part, along the transverse direction "T", the lower plate 14 constitutes the contact-bearing insulating block of the connector 10 which bears, in a known fashion, two groups of four electrical contact blades 22.

The general design of the contact-bearing block with its blades is for example described and shown in detail in the abovementioned documents.

All the contact blades here are identical.

Each contact blade 22 generally lies in a longitudinal vertical plane and includes a substantially horizontal branch 24 that has a convex curved first end (not shown in the figures) called the "contact" end intended to cooperate with a corresponding pad on the card.

The free contact end is capable of projecting, vertically upwards, from the horizontal plane of the upper plane face 20 of the insulating block 14 when the card is at the end of insertion travel, as described in the abovementioned two documents.

The blade 22 includes a longitudinal central portion 30 for connecting the contact blade 22, which connecting portion ensures that the blade 22 is positioned and fastened in the insulating block 14.

The connecting portion 30 is extended by and terminates in a second end, called the connection end, which is in the form of a right-angled connection tab 34 which allows the blade 22 to be electrically connected to a corresponding conducting track (not shown) formed on the upper face 8 of the printed circuit board PCB.

The connection tab includes here a vertical branch 36 that extends, from the rear end of the central connecting portion 30, downwards, so as to be approximately level with the lower horizontal face 21 of the insulating block 14.

The connection tab 34 also includes a horizontal branch 38 that extends the vertical branch 36, starting from its lower end, horizontally towards the rear and lying slightly below the plane of the lower face 21.

The connection tabs 34, each with a horizontal branch 38, are therefore in this case of the type to be reflow-soldered to corresponding conducting tracks on the upper face 8 of the printed circuit board PCB (these tracks and this PCB not being shown in the figures).

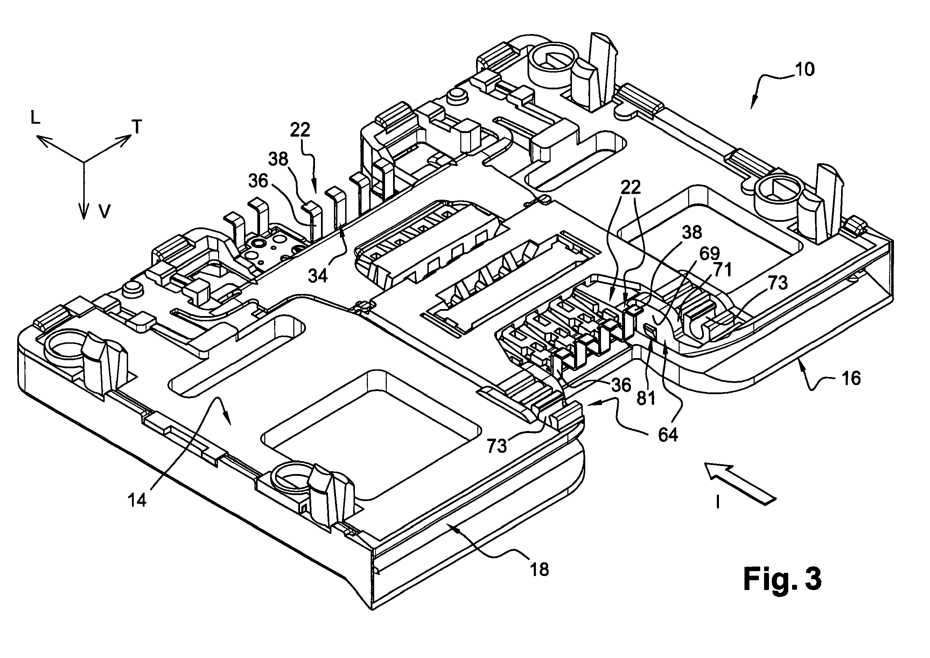

As may be seen in particular in Figure 3, in the absence of means according to the invention for protection against breaching, it is possible for the contact blades, and especially the connection tabs 34 of the blades, to be easily reached.

The abovementioned documents, which illustrate a connector according to the prior art with no protection means, themselves illustrate the ease with which a break-in can be attempted.

The invention aims to preferentially protect at least one of the contact blades 22, which in this case is the signal blade 22a called the I/O blade, the design of which is in every point analogous to those of the seven other blades of the connector, and therefore analogous to that which has just been described in detail.

In the figures and the rest of the description, the I/O contact blade protected according to the teachings of the invention (and all its parts) will be denoted by the same reference numerals as the other blades, but with the letter "a" as suffix.

If it is desired to protect the contact blade 22a against any attempt at break-in, it is desirable to essentially protect its connection tab 34a with its two branches 36a and 38a.

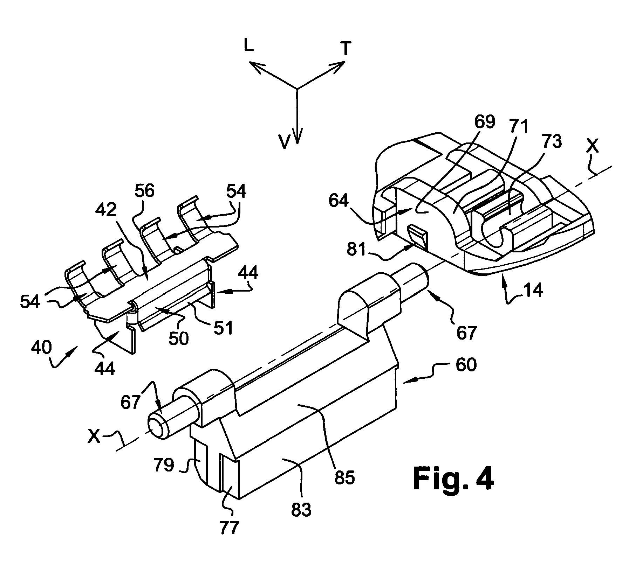

According to the teachings of the invention, this protection is achieved by means of a protective metal cage 40, which is illustrated in particular in perspective and in detail in Figures 2 and 4.

The protective metal cage 40 is made of a conductive metal sheet, cut and folded.

It consists mainly of a first, vertical rear transverse, protective plate 42 and two opposed lateral vertical longitudinal plates 44 that are joined together by a horizontal upper plate 50.

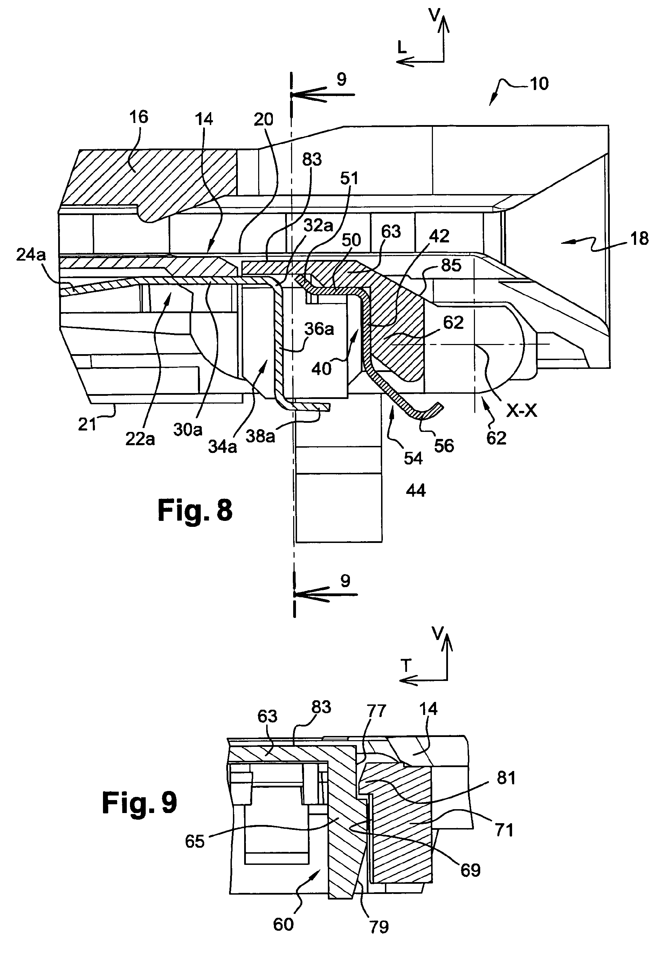

In the mounted position of the protective cage 40 in the insulating block 14 of the connector 10, as may be seen in particular in Figure 8, the transverse first protective plate 42 extends vertically downwards from the horizontal plate 50 substantially from the horizontal plane of the central connecting portion 30 and over a height slightly less than the height of the vertical branch 36a of the connection tab 34a.

Given the transverse width of the plate 42, this extends opposite not only the signal blade 22a but also another blade 22 immediately adjacent thereto.

As may be seen in Figures 2 and 3, the longitudinally oriented lateral vertical plates 44 are of substantially square outline and extend substantially over the entire height of the connection tab 34a, having the function of laterally protecting both the vertical branch 36a and the horizontal branch 38a, along their two opposed longitudinal sides.

The horizontal protective metal plate 50 of the cage 40 extends horizontally substantially in the plane of the central connecting part 30a and lies above the horizontal branch 38a of the connection tab 34a (said plate being offset vertically upwards).

The horizontal plate 50 extends longitudinally towards the front in the direction of the right-angle bend 32a, where the vertical branch 36a joins with the connecting portion 30a, and is bounded by a curved front edge 51 that is extremely close to the right-angle bend 32a without however, of course, being in electrical contact with the latter.

The vertical protective plate 42 is extended transversely on either side of the lateral plates 44 and thus extend opposite all the vertical branches of the connection tabs of the four contact blades forming part of the same group (here the rear group).

The horizontal plate 50 extends only between the two lateral plates 44 and it thus protects the connection tab 34a and the connection tab 34 of the contact blade 22 immediately adjacent to the signal blade 22a.

In line with each of the connection tabs, and more particularly in line with the connection tab 34a, the vertical plate 42 is extended vertically downwards and longitudinally rearwards by an inclined extension 54 having substantially the same transverse width as that of the connection tab 34a, which inclined extension terminates in a convex curved end portion 56 oriented vertically downwards in the direction of the upper face 8 of the printed circuit board PCB.

As may be seen in Figure 8, in which the connector 10 is shown before mounting and soldering in the board PCB, the extension 54 extends, with its end 56, vertically downwards below the plane in which the horizontal branches 38 lie, and especially the branch 34a, so that, when the connector 10 is mounted on the board PCB, the end 56 bears elastically in contact with a conducting earth track, such as the track P illustrated in Figure 1.

An earth track P common to all the extensions 54, 56 may be provided.

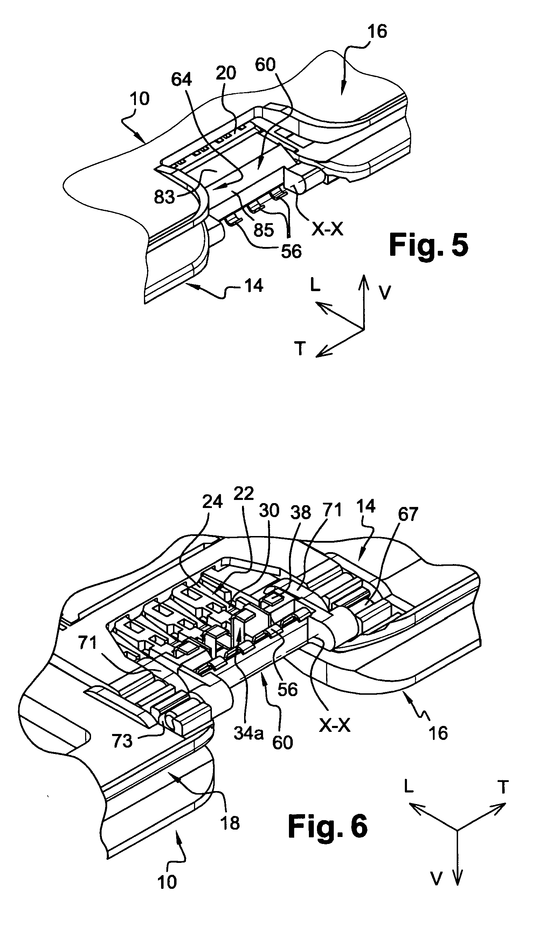

As may be seen in particular in Figures 5 to 7, the signal blade 22a is entirely surrounded by the protective cage 40, and especially by the protective plates 42, 44, 50 and by the extension 56.

Any break-in attempt by means of a conducting element, such as for example a drill, necessarily results, in particular owing to the dimensions of the various components, in an electrical contact being established between the protective cage 40 and the signal blade 22a.

This electrical contact results in an earth short-circuit being established between the signal blade 22a and the earth circuit.

This short circuit is detected as a signal representative of a break-in attempt.

Even when there is no actual drilling, any break-in attempt by using a hook-up wire, given the very close proximity of the protective plates to the connection tab 34a, results in a contact short circuit between these components.

It should be noted in the figures that the protective cage 40 has in fact four extensions 54 with their curved ends 56, each one of which extends opposite a connection tab 34 of a contact blade facing the rear group of four blades that is protected by the protective metal cage 40.

It is therefore not necessarily the extension 54 of the protective plate 42 that is placed facing the branch 34a of the signal blade which is itself in contact with an earth track, it being possible for this contact to be made via any of the extensions 54, 56 since the cage is produced as a single component made of conducting material.

According to another feature of the invention, an insulating support consisting of a moulded component made of insulating plastic is provided in order to insulate the protective cage 40 and to be mounted so as to move.

As may be seen more particularly in Figures 2 and 4, the support 60 takes the general form of a horizontal plate 62 of substantially rectangular shape, to which the protective plate 42 is adjacent, of a horizontal plate 63, to which the horizontal plate 50 is internally adjacent, and two vertical lateral flanges 65, to which the said plates are joined, each flange bearing a cylindrical articulation pivot 67 that extends transversely towards the outside.

The shapes and the dimensions of the insulating support 60 are such that it fixedly houses the protective cage 40 and are such that the support itself may be housed in the housing 64 available in the lower plate 14 facing the connection tabs 34 of the four blades of the rear contact blade group, and especially between the facing internal faces 69 of two downwardly extending vertical lateral cheeks 71 produced by moulding with the lower plate 14.

On either side of each cheek 71, the plate 14 has two cylindrical housings 73, each of which is designed to house a pivot 67, which housings are partially open vertically downwards so as to be able to assemble and mount the support 60 by fitting or "fitting-in" the pivot 67 into the housing 73.

Each lateral flange 65 includes, in its external lateral face 75, a notch 77 and a ramp 79, these being arranged so as to make it easier to pivot and lock the insulating support 60.

Complementarily, each internal face 69 of a cheek 71 includes a raised locking peg 81.

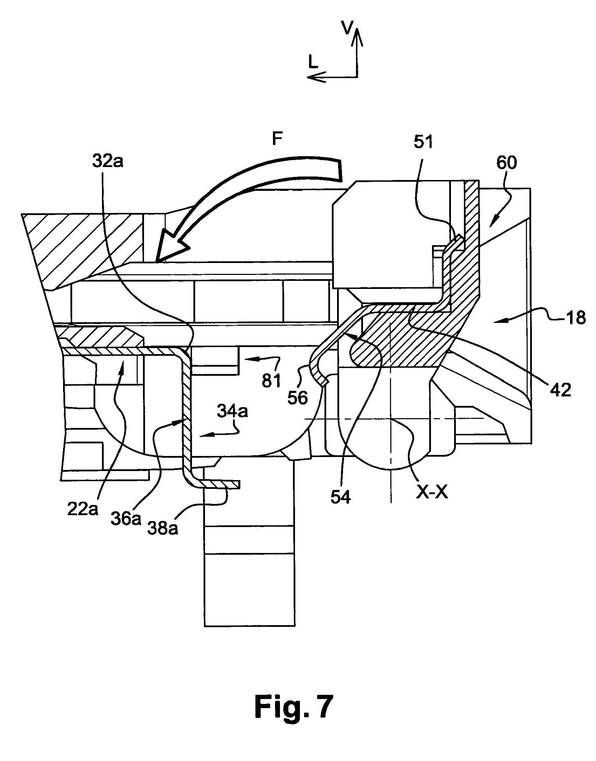

As may be seen especially in Figures 1 and 7, the insulating support 60, with its protective cage 40 (mounted by snap-fastening in the support 60) is initially and temporarily mounted, and indexed, in an orientation angularly offset by 90° to its final mounted position for providing a protection function.

In this initial position illustrated in Figure 7, the connection tabs 34, and especially the connection tab 34a, are not protected and are accessible from above the connector, especially so as for example to carry out checking operations on the connector, using probes (not shown) or infrared beam welding operations, or any manual rework.

In this initial assembly position, it may also be seen, especially in Figures 1 and 7, that the insulating support 60 constitutes an obstacle to the insertion of a card into the slot 18.

Once the connector 10 has been fastened to the printed circuit board PCB with the lower face 21 bearing on the upper face 8, the insulating support 60 is then pivoted about its pivot axis X-X in the anticlockwise direction indicated by the arrow F in Figure 7, through one quarter of a turn or 90°, until it occupies the final mounted, and locked, position illustrated in Figures 8 and 9.

During this pivoting movement, the curved ends 56 bear elastically, by elastic deformation of the extensions 54, on the upper face 8 of the board PCB, especially with at least one earth conducting track P.

During the pivoting movement, the ramps 79 and the notches 77 pass beyond the pegs 81 and ensure angular locking, in the mounted position, of the insulating support 60 and on the protective cage 40, as illustrated in Figures 8 and 9.

Should it have been forgotten to intentionally pivot the insulating support 60 in order for it to occupy its final position of providing a protection function, any attempt at inserting a card 18, starting from the position illustrated in Figure 7, ends up in encountering the obstacle formed by the insulating support 60 and in causing the latter to pivot, if a sufficient force is exerted by means of the card.

In the mounted position illustrated in Figure 8, it may be seen that the external upper face 83 of the horizontal plate 63 lies slightly below the plane of the upper face 20 and that it is preceded, longitudinally rearwards, by an inclined ramp 85 that helps to facilitate the insertion of a card into the slot 18.

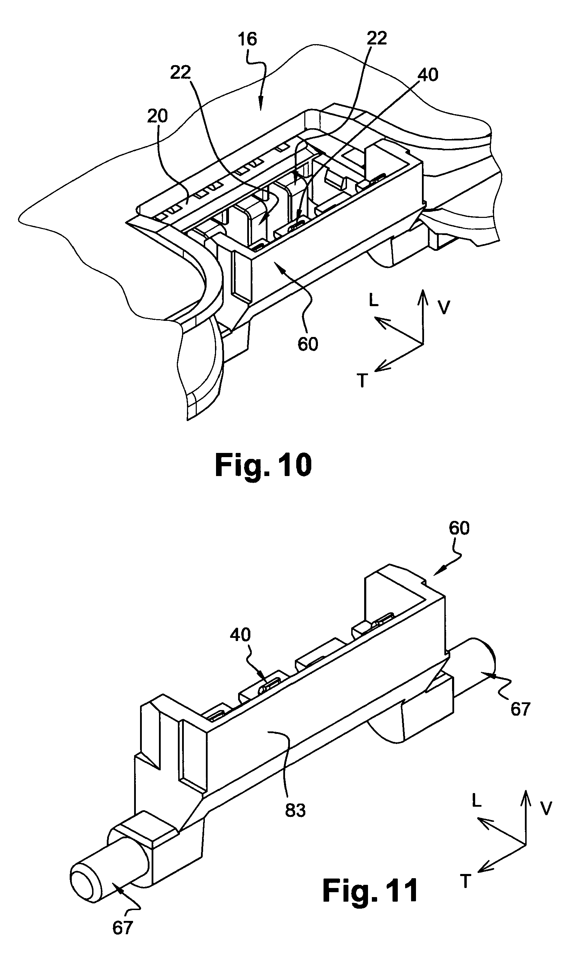

The alternative embodiment illustrated in Figures 10 to 13 will now be described.

In this alternative embodiment, the installation of the subassembly formed by the insulating support 60 and the constituent elements of the protective metal cage 40 on the connector 10 are analogous to those described above.

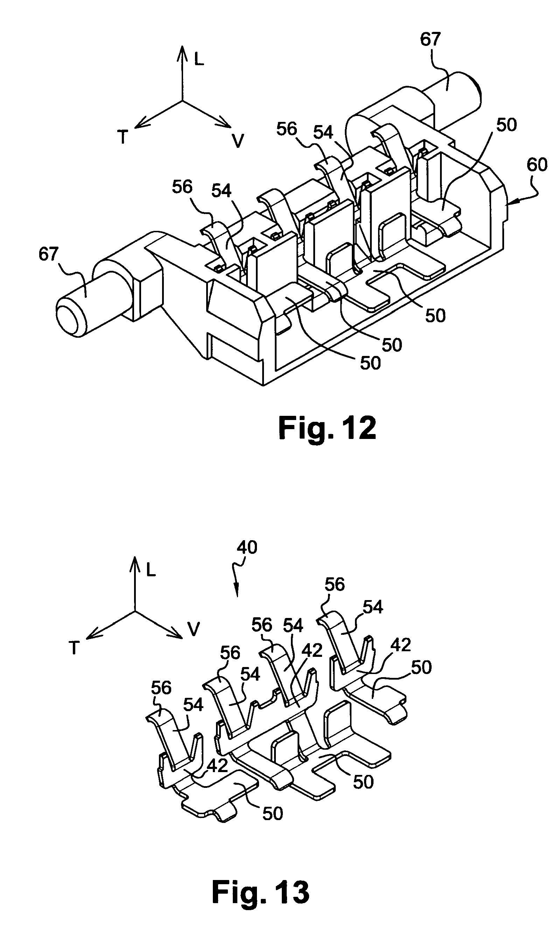

As may be seen most particularly in Figure 13, which is a perspective view on a large scale of the protective cage 40, it may be seen first of all that the said cage is made here in the form of three separate metal elements that are all fitted into complementary housings in the insulating support 60.

Of course, if the cage 40 is made of three elements, each of the elements has to be connected to earth, that is to say to an earth track P, via the end 56 of an extension 54.

The central element illustrated in Figure 13 simultaneously protects two contact blades 22, whereas each of the two lateral elements illustrated in Figure 13 protects one contact blade 22.

In this alternative embodiment, it should be noted that the protective cage 40 no longer includes a lateral plate 44.

The application of the invention is not limited to a connector of the contact-landing type described in the abovementioned documents.

Likewise, it is possible to similarly protect both four-blade groups of one and the same connector.

Nor is the invention limited to connection tabs to be connected by reflow soldering, but it may also apply to connection tabs of the type that are inserted into holes in the printed circuit board PCB.

Nor is the invention limited to the design of the electrical contact blades described above, and especially to straight contact blades of the "cantilever" type, rather it can also be applied to the protection of hairpin contact blades.

## Claims

1. Connection assembly (8-10) for the connection of an electronic memory card that includes, on one of its main faces, a plurality of electrical contact pads, of the type that includes a printed circuit board (PCB) bearing, on its upper face (8), an electrical connector (10) comprising a contact-bearing block (14) made of insulating material and having a plane horizontal upper face (20) and a plurality of electrical conductors (22, 22a) in the form of elastically deformable blades arranged parallel to a longitudinal horizontal direction, each contact blade (22, 22a) comprising:
- a curved first end for contact with a corresponding pad on the card, this first end being capable of projecting from the upper plane face (20) of the insulating block (14);
- a longitudinal central portion (30, 30a) for connecting the blade to the insulating block (14); and
- a second end for connecting the blade, constituting a pad (34, 34a) for electrically connecting the blade (22, 22a) to a conducting track on the upper face (8) of the printed circuit board (PCB),
the connector including at least one "signal" contact blade (22a),
**characterized in that** the connector includes at least one protective metal plate (42, 44, 50) that extends opposite a portion of the signal blade (22a) facing said protective metal plate, and that is electrically connected to an "earth" conducting track (P) on the upper face (8) of the printed circuit board (PCB) forming part of an earth circuit.

2. Connection assembly according to the preceding claim, **characterized in that** the connector includes at least one first protective metal plate (42) that extends vertically opposite a portion (36a) of the pad (34a) for connecting the signal blade (22a) and is electrically connected to the conducting earth track (P).

3. Connection assembly according to either of the preceding claims, **characterized in that** the first protective metal plate (42) lies in a transverse plane orthogonal to the longitudinal direction (L) of the connection pad (34a) that it protects.

4. Connection assembly according to the preceding claim, **characterized in that** the connection pad (34a) of the first signal blade (22a) includes at least one vertical branch (36a) of transverse orientation parallel to the first protective plate (42).

5. Connection assembly according to the preceding claim, **characterized in that** the connection pad (34a) of the first signal blade (22a) includes at least one lower horizontal branch (38a) that extends the vertical branch (36a) rearwards and lies substantially in the plane of the lower face (21) of the insulating block (14).

6. Connection assembly according to the preceding claim, **characterized in that** the first protective plate (42) includes a lower protective extension (54) that extends opposite the connection pad (34a).

7. Connection assembly according to the preceding claim, **characterized in that** the said extension constitutes a conducting tongue (54) that extends longitudinally rearwards, the free end (56) of the said tongue being in electrical contact with the conducting earth track (P).

8. Connection assembly according to any one of the preceding claims, **characterized in that** the connector (10) includes two second mutually parallel and opposed protective plates (44), each of which extends vertically opposite a portion of the connection pad (34a) of the signal blade (22a), lies in a lateral plane parallel to the longitudinal direction (L) of the connection pad (34a) that it protects and is electrically connected to the earth track (P) so as to protect the connection pad on its two longitudinal sides.

9. Connection assembly according to any one of the preceding claims, **characterized in that** the connector includes at least one protective metal plate (50) that extends horizontally above and opposite a portion of the signal blade (22a).

10. Connection assembly according to the preceding claim, taken in combination with one of Claims 5 to 7, **characterized in that** the said horizontal protective plate (50) extends opposite the lower horizontal branch (38a) of the connection pad (34a) of the signal blade.

11. Connection assembly according to any one of the preceding claims, **characterized in that** each protective plate (42, 44, 50) belongs to a protective metal cage (40).

12. Connection assembly according to any one of the preceding claims, **characterized in that** the connector includes a support (60) made of insulating material, which carries each protective plate and is attached in a complementary housing (64) of the insulating block (14).

13. Connection assembly according to the preceding claim, **characterized in that** the insulating support (60) is mounted so as to move, relative to the insulating block (14) and to the upper face (8) of the printed circuit board (PCB), between an initial, temporary and indexed, assembly position in which the signal blade (22a) is not protected and a final, mounted position, for protecting the signal blade (22a), in which final position each protective plate is in its protection position and is connected to the earth track (P).

14. Connection assembly according to the preceding claim, **characterized in that** the insulating support is mounted so as to pivot about a horizontal transverse axis (X-X).

15. Connection assembly according to either of Claims 13 and 14, **characterized in that** the connector (10) includes means (77, 81) for locking the insulating support (60) in its final, mounted protection position.

## Patentansprüche

1. Verbindungsanordnung (8 - 10) zum Anschluss einer elektronischen Speicherkarte, die auf einer ihrer Hauptflächen eine Mehrzahl elektrischer Kontaktflächen des Typs umfasst, der auf seiner Oberseite (8) eine Auflagerung für eine gedruckte Schaltung, einen elektrischen Verbinder (10) mit einem Kontaktblock (14) aus Isolationsmaterial mit einer ebenen horizontalen Oberseite (20) und einer Mehrzahl elektrischer Leiter (22, 22a) in Form von elastisch verformbaren Messern aufweist, die parallel zu einer horizontalen Längsrichtung angeordnet sind, wobei jedes Kontaktmesser (22, 22a) die folgenden Merkmale umfasst:
- ein kurvenförmiges erstes Ende zum Kontaktieren einer entsprechenden Fläche auf der Karte, wobei dieses erste Ende in der Lage ist, aus der ebenen Oberseite (20) des Isolierblocks (14) hervorzuragen;
- einen mittleren Längsabschnitt (30, 30a) zum Verbinden des Messers mit dem Isolierblock (14); und
- ein zweites Ende zum Verbinden des Messers, das eine Kontaktfläche (34, 34a) zum elektrischen Anschluss des Messers (22, 22a) an eine Leiterbahn auf der Oberseite (8) der gedruckten Schaltung darstellt,
wobei der Verbinder wenigstens ein "Signal"-Kontaktmesser (22a) umfasst;
**gekennzeichnet dadurch, dass**
der Verbinder wenigstens eine Metall-Schutzplatte (42, 44, 50) umfasst, die sich gegenüber einem Abschnitt des Signal-Kontaktmessers (22a) erstreckt, welcher der Metall-Schutzplatte zugewandt ist, und mit einem "Erd"-Leiter (P) auf der Oberseite (8) der gedruckten Schaltung elektrisch verbunden ist, der Teil eines Erdungskreises ist.

2. Verbindungsanordnung nach dem vorstehenden Anspruch, **dadurch gekennzeichnet, dass** der Verbinder wenigstens eine erste Metall-Schutzplatte (42) umfasst, welche sich vertikal gegenüber einem Abschnitt (36a) der Kontaktfläche (34a) zum Verbinden des Signal-Kontaktmessers (22a) erstreckt und elektrisch mit dem Erdleiter (P) verbunden ist.

3. Verbindungsanordnung nach einem der vorstehenden Ansprüche, **dadurch gekennzeichnet, dass** die erste Metall-Schutzplatte (42) in einer Querebene im rechten Winkel zur Längsrichtung (L) der Anschlussfläche (34a) angeordnet ist, die sie schützt.

4. Verbindungsanordnung nach dem vorstehenden Anspruch, **dadurch gekennzeichnet, dass** die Anschlussfläche (34a) des ersten Signal-Kontaktmessers (22a) wenigstens einen vertikalen Abzweig (36a) in Querausrichtung parallel zur ersten Schutzplatte (42) umfasst.

5. Verbindungsanordnung nach dem vorstehenden Anspruch, **dadurch gekennzeichnet, dass** die Anschlussfläche (34a) des ersten Signal-Kontaktmessers (22a) wenigstens einen unteren horizontalen Abzweig (38a) umfasst, der den vertikalen Abzweig (36a) nach hinten verlängert und im Wesentlichen in der Ebene der Unterseite (21) des Isolierblocks (14) angeordnet ist.

6. Verbindungsanordnung nach dem vorstehenden Anspruch,**dadurch gekennzeichnet, dass** die erste Schutzplatte (42) ein unteres Verlängerungs-Schutzstück (54) aufweist, das sich gegenüber der Anschlussfläche (34a) erstreckt.

7. Verbindungsanordnung nach dem vorstehenden Anspruch,**dadurch gekennzeichnet, dass** das Verlängerungsstück einen leitenden Zungenabschnitt (54) darstellt, der sich längs nach hinten erstreckt, wobei das freie Ende (56) des Zungenabschnitts sich in elektrischem Kontakt mit dem Erdleiter (P) befindet.

8. Verbindungsanordnung nach einem der vorstehenden Ansprüche, **dadurch gekennzeichnet, dass** der Verbinder (10) zwei zweite gegenseitig parallele und gegenüberliegende Schutzplatten (44) umfasst, die sich jeweils vertikal gegenüber einem Abschnitt der Anschlussfläche (34a) des Signal-Kontaktmessers (22a) erstrecken, in einer seitlichen Ebene parallel zur Längsrichtung (L) der Kontaktfläche (34a), die sie schützen, befinden und elektrisch mit dem Erdleiter (P) verbunden sind, um die Anschlussfläche auf beiden Längsflächen zu schützen.

9. Verbindungsanordnung nach einem der vorstehenden Ansprüche, **dadurch gekennzeichnet, dass** der Verbinder wenigstens eine Metall-Schutzplatte (50) umfasst, die sich horizontal über und gegenüber einem Abschnitt des Signal-Kontaktmessers (22a) erstreckt.

10. Verbindungsanordnung nach dem vorstehenden Anspruch in Kombination mit einem der Ansprüche 5 bis 7, **dadurch gekennzeichnet, dass** die horizontale Schutzplatte (50) sich gegenüber dem unteren horizontalen Abzweig (38a) der Anschlussfläche (34a) des Signal-Kontaktmessers erstreckt.

11. Verbindungsanordnung nach einem der vorstehenden Ansprüche, **dadurch gekennzeichnet, dass** jede Schutzplatte (42, 44, 50) zu einem Metall-Schutzkäfig (40) gehört.

12. Verbindungsanordnung nach einem der vorstehenden Ansprüche, **dadurch gekennzeichnet, dass** der Verbinder eine Halterung (60) aus Isolationsmaterial umfasst, welche die einzelnen Schutzplatten trägt und in einem Komplementärgehäuse (64) des Isolierblocks (14) angebracht ist.

13. Verbindungsanordnung nach dem vorstehenden Anspruch, **dadurch gekennzeichnet, dass** die Isolierhalterung (60) so angebracht ist, dass sie sich relativ zum Isolierblock (14) und zur Oberseite (8) der gedruckten Schaltung zwischen einer anfänglichen, temporären und gerasteten Gebrauchsstellung, in der das Signal-Kontaktmesser (22a) nicht geschützt ist, und einer Endstellung zum Schutz des Signal-Kontaktmessers (22a) bewegt, in der sich jede Schutzplatte in Schutzstellung befindet und mit dem Erdleiter (P) verbunden ist.

14. Verbindungsanordnung nach dem vorstehenden Anspruch, **dadurch gekennzeichnet, dass** die Isolierhalterung so angebracht ist, dass sie um eine horizontale Querachse (X-X) dreht.

15. Verbindungsanordnung nach einem der Ansprüche 13 und 14, **dadurch gekennzeichnet, dass** der Verbinder (10) Vorrichtungen (77, 81) zum Arretieren der Isolierhalterung (60) in ihrer End- und Schutzstellung umfasst.

## Revendications

1. Ensemble de connexion (8-10) pour le raccordement d'une carte à mémoire électronique comportant, dans une de ses faces principales, une pluralité de plages de contact électrique, du type qui comporte une plaque à circuits imprimés (PCB) qui porte, sur sa face supérieure (8), un connecteur électrique (10) comportant un bloc en matériau isolant formant porte-contacts (14) et présentant une face plane (20) supérieure horizontale et une pluralité de conducteurs électriques (22, 22a) en forme de lames déformables élastiquement et disposées parallèlement à une direction horizontale longitudinale, chaque lame (22, 22a) de contact comprenant :
- une première extrémité incurvée de contact avec une plage correspondante de la carte, cette première extrémité étant susceptible de faire saillie hors du plan de la face plane supérieure (20) du bloc isolant (14) ;
- une portion médiane longitudinale de liaison (30, 30a) de la lame au bloc isolant (14) ; et
- une seconde extrémité de raccordement de la lame constituant une patte (34, 34a) de raccordement électrique de la lame (22, 22a) à une piste conductrice de la face supérieure (8) de la plaque à circuits imprimés (PCB) ;
le connecteur comportant au moins une lame de contact (22a) dite de signal,
**caractérisé en ce que** le connecteur comporte au moins une plaque métallique de protection (42, 44, 50) qui s'étend en regard d'une portion de la lame de signal (22a) en vis-à-vis de la plaque métallique de protection, et qui est reliée électriquement à une piste conductrice (P), dite de masse, de la face supérieure (8) de la plaque à circuits imprimés (PCB) appartenant à un circuit de masse.

2. Ensemble de connexion selon la revendication précédente, **caractérisé en ce que** le connecteur comporte au moins une première plaque métallique de protection (42) qui s'étend verticalement en regard d'une portion (36a) de la patte (34a) de raccordement de la lame de signal (22a), et qui est reliée électriquement à la piste conductrice de masse (P).

3. Ensemble de connexion selon l'une quelconque des revendications précédentes, **caractérisé en ce que** la première plaque métallique de protection (42) s'étend dans un plan transversal orthogonal à la direction longitudinale (L) de la patte de raccordement (34a) qu'elle protège.

4. Ensemble de connexion selon la revendication précédente, **caractérisé en ce que** la patte de raccordement (34a) de la première lame de signal (22a) comporte au moins une branche verticale (36a) d'orientation transversale parallèle à la première plaque de protection (42).

5. Ensemble de connexion selon la revendication précédente, **caractérisé en ce que** la patte de raccordement (34a) de la première lame de signal (22a) comporte au moins une branche (38a) horizontale inférieure qui prolonge la branche verticale (36a) vers l'arrière et qui s'étend sensiblement dans le plan de la face inférieure (21) du bloc isolant (14).

6. Ensemble de connexion selon la revendication précédente, **caractérisé en ce que** la première plaque protection (42) comporte un prolongement inférieur de protection (54) qui s'étend en regard de la patte de raccordement (34a).

7. Ensemble de connexion selon la revendication précédente, **caractérisé en ce que** ledit prolongement constitue une languette conductrice (54) qui s'étend longitudinalement vers l'arrière et dont l'extrémité libre (56) est en contact électrique avec la piste conductrice (P) de masse.

8. Ensemble de connexion selon l'une quelconque des revendications précédentes, **caractérisé en ce que** le connecteur (10) comporte deux secondes plaques parallèles et opposées de protection (44) dont chacune s'étend verticalement en regard d'une portion de la patte de raccordement (34a) de la lame de signal (22a), s'étend dans un plan latéral parallèle à la direction longitudinale (L) de la patte de raccordement (34a) qu'elle protège, et est reliée électriquement à la piste de masse (P), de manière à protéger la patte de raccordement sur ses deux côtés longitudinaux.

9. Ensemble de connexion selon l'une quelconque des revendications précédentes, **caractérisé en ce que** le connecteur comporte au moins une plaque métallique de protection (50) qui s'étend horizontalement au-dessus et en regard d'une portion de la lame de signal (22a).

10. Ensemble de connexion selon la revendication précédente prise en combinaison avec l'une des revendications 5 à 7, **caractérisé en ce que** ladite plaque de protection horizontale (50) s'étend en regard de la branche horizontale inférieure (38a) de la patte de raccordement (34a) de la lame de signal.

11. Ensemble de connexion selon l'une quelconque des revendications précédentes, **caractérisé en ce que** chaque plaque de protection (42, 44, 50) appartient à une cage métallique de protection (40).

12. Ensemble de connexion selon l'une quelconque des revendications précédentes, **caractérisé en ce que** le connecteur comporte un support (60) en matériau isolant qui porte chaque plaque protection et qui est rapporté dans un logement complémentaire (64) du bloc isolant (14).

13. Ensemble de connexion selon la revendication précédente, **caractérisé en ce que** le support isolant (60) est monté mobile, par rapport au bloc isolant (14) et à la face supérieure (8) de la plaque à circuits imprimés (PCB), entre une position initiale temporaire et indexée d'assemblage dans laquelle la lame de signal (22a) n'est pas protégée, et une position finale montée de protection de la lame de signal (22a) dans laquelle chaque plaque de protection est dans sa position de protection et est reliée à la piste de masse (P).

14. Ensemble de connexion selon la revendication précédente, **caractérisé en ce que** le support isolant est monté mobile en pivotement autour d'un axe transversal horizontal (X-X).

15. Ensemble de connexion selon l'une des revendications 13 ou 14, **caractérisé en ce que** le connecteur (10) comporte des moyens (77, 81) de verrouillage du support isolant (60) dans sa position finale montée de protection.
